(19) Europäisches Patentamt

European Patent Office

Office européen des brevets

(11) **EP 3 541 008 A1**

(12) **EUROPEAN PATENT APPLICATION**

(43) Date of publication:
18.09.2019 Bulletin 2019/38

(51) Int Cl.:
*H04L 9/32* (2006.01)          *H04W 76/14* (2018.01)
*H04W 48/16* (2009.01)

(21) Application number: 18161669.9

(22) Date of filing: 14.03.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Intel IP Corporation
Santa Clara, CA 95054 (US)

(72) Inventor: ELLENBECK, Jan
82031 Grünwald (DE)

(74) Representative: Viering, Jentschura & Partner
mbB
Patent- und Rechtsanwälte
Am Brauhaus 8
01099 Dresden (DE)

(54) **COMMUNICATION DEVICE AND METHOD FOR DEVICE DISCOVERY**

(57)     According to various embodiments, a communication device is described comprising a processor or a hash generator configured to determine or generate a hash value based on at least one of an identification of at least the communication device and a secret information shared between the communication device and another communication device, a message generator configured to generate a discovery message comprising the hash value and a transmitter configured to transmit the discovery message to the another communication device.

**FIG 8**

**Description**

**Technical Field**

Exemplary implementations described herein generally relate to communication devices and device discovery.

**Background**

To be able to directly communicate with one another, communication devices typically need to be able to discover each other, i.e. to make their presence known to other communication devices and obtain knowledge about the presence of other communication devices. A typical mechanism to achieve this is the exchange of discovery messages. Such messages should allow efficient addressing while at the same time achieve privacy and prevent trackability. Corresponding approaches for device discovery are therefore desirable.

**Brief Description of the Drawings**

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a communication system, e.g. an LTE (Long Term Evolution) communication system as specified by 3GPP (Third Generation Partnership Project).
Figure 2 shows an exemplary communication arrangement illustrating D2D (device-to-device) communication.
Figure 3 shows an exemplary communication arrangement 300 which includes multiple mobile D2D communication devices.
Figure 4 shows an exemplary message flow diagram for hash ID exchange for presence discovery.
Figure 5 shows an exemplary message flow diagram for hash ID exchange for dedicated discovery.
Figure 6 shows an exemplary message flow diagram for hash ID exchange for group discovery.
Figure 7 shows a diagram illustrating exemplary avoidance of hash collisions between two users.
Figure 8 shows an exemplary communication device.
Figure 9 shows a flow diagram illustrating an exemplary method for device discovery.

**Description of Exemplary Implementations**

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

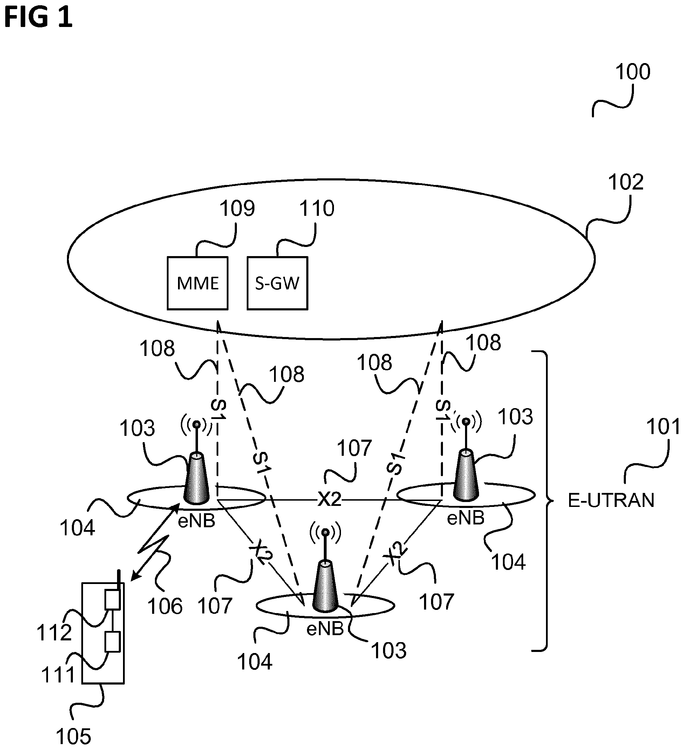

Figure 1 shows a communication system 100, e.g. an LTE (Long Term Evolution) communication system as specified by 3GPP (Third Generation Partnership Project).

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in one of the mobile radio cells 104 (in this example the leftmost radio cell 104) may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

In Release 12 and 13 3GPP has introduced "Device to Device (D2D)" communication with the aim to allow a specific mobile device (i.e. UE) such as mobile terminal 105 to discover other mobile devices in its proximity and eventually communicate with each other (Proximity based Services, ProSe) directly, i.e. bypassing the base stations 103.

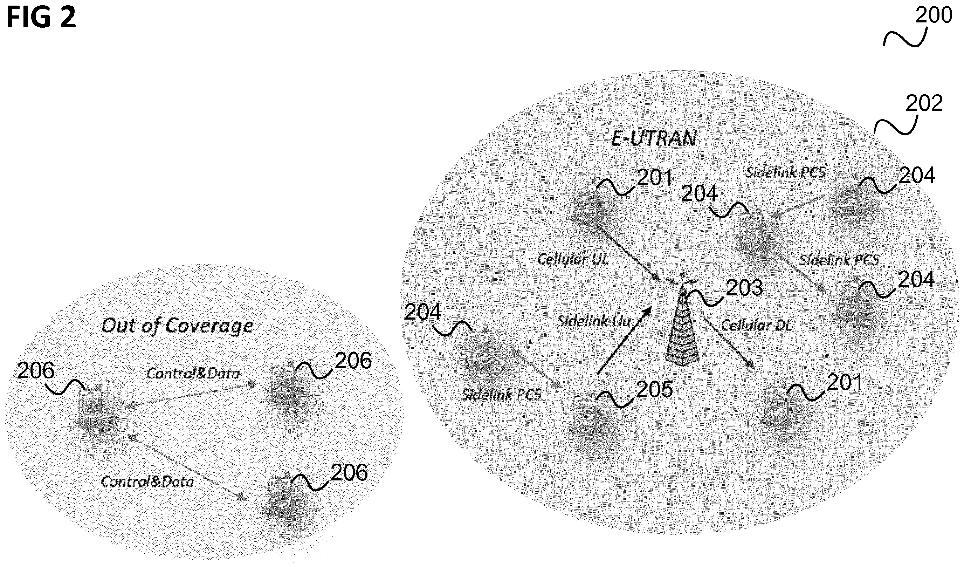

Figure 2 shows a communication arrangement 200 illustrating D2D (device-to-device) communication.

In the example of Figure 2, first mobile devices (UEs) 201 located in a coverage area 202 of an E-UTRAN are served by a base station 203 and perform uplink (UL) and downlink (DL) communication with the base station 203. Second mobile devices 204, which are also located in the coverage area 202, use device-to-device communication (D2D). A third mobile device 205 located in the coverage area 202 uses both direct communication with one of the second mobile devices 204 and also communicates with the base station 203.

Fourth mobile devices 206 are located outside of the coverage area 202 of base station 203 and use direct communication to communicate with each other.

In a D2D communication system, the mobile devices 204, 205 must be able to address each other, wherein it is desirable that the addressing is private (e.g. not visible to other users) and not trackable (i.e. other users are not able to notice that the same user is repeatedly addressed).

A typical approach for addressing is to include source and destination addresses in the header of each transmission, see e.g. TCP/IP, Ethernet, or WiFi 802.11 at the cost of a larger overhead. One approach for private addressing of a receiver (e.g. used in LTE for PDCCH) is scrambling of a message with the receiver's id. However, this can be circumvented by an exhaustive search in case the search space is not too big and a correct decoding can be recognized. One way to avoid trackability is to assign a temporary identifier (like C-RNTI in LTE) that is changed over time. However, in a D2D systems this would be very challenging due to the missing central entity.

In the following, an efficient and private hash-based addressing mechanism with collision resolution for D2D systems is described which can be employed for the efficient (i.e., low header overhead) and privacy-respecting identification of source and destination address of one or more users in a D2D wireless communication system, such as out of coverage D2D devices 206, for example in a discovery phase.

According to various example, one or more of the following is provided:

- Efficient addressing: only one hash ID instead of source and (multiple) destination addresses needs to be transmitted. This saves bits in transmission headers, which is especially valuable for long-range / low rate transmissions.
- Private addressing: for searching a specific user without revealing the search to any listener around or for providing answers to a specific user without the ability of a third user to identify source or destination.
- No trackability: with hash IDs that are updated each frame (of the frame structure based on which communication is performed) based on a unique global timestamp no third user can predict future hash IDs or map an observed hash ID to a previously observed ID.
- Hash collision resolution: with frequent hash ID updates, hash ID collision, which can occur with some probability (see birthday paradox), does not repeat in the same way and is thus only a short-lived transient error instead of a fatal permanent situation in which, e.g., two devices with the same ID could never communicate.

It should be noted that in general, several hash collision resolution techniques exist that do not apply in this context. One alternative approach would involve some kind of signaling to detect and potentially resolve a conflict but since one user would have to permanently change its address, all his friends would have to be notified.

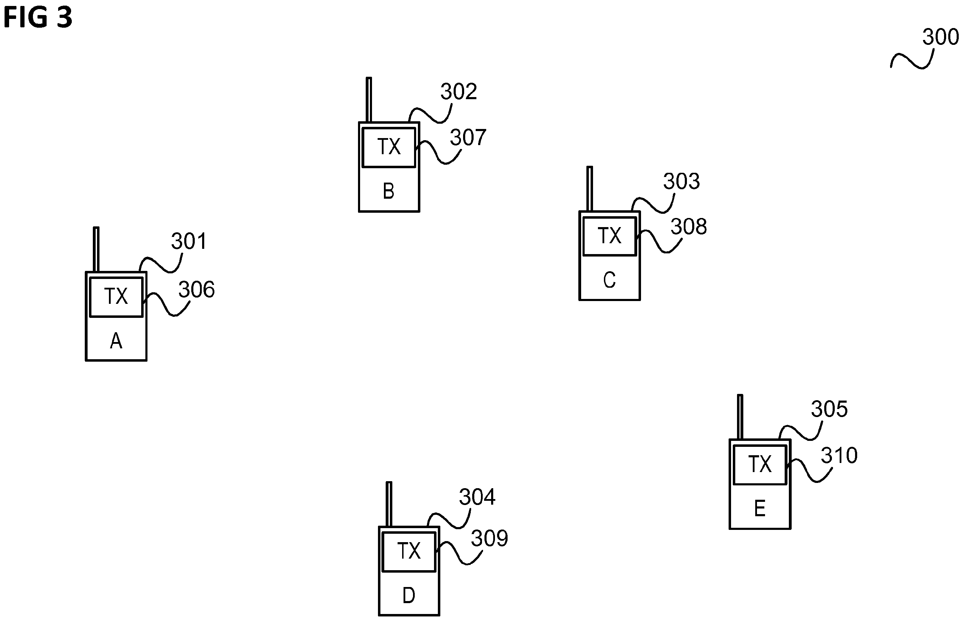

For the following description, a communication arrangement as shown in figure 3 is used as an example.

Figure 3 shows a communication arrangement 300 which includes a first mobile device 301 (corresponding to a user A), a second mobile device 302 (corresponding to a user B), a third mobile device 303 (corresponding to a user C), a fourth mobile device 304 (corresponding to a user D) and a fifth mobile device 305 (corresponding to a user E). Each mobile device 301 to 305 has a respective transceiver 306 to 310 configured to perform D2D communication and in particular configured to generated hashes (i.e. hash addresses or hash IDs) as described in the following.

According to various examples, pair and group hashes are used that allow user A, for example, to address a certain other user, e.g. user B, or multiple other users, e.g. user B and user C, etc., without the need to explicitly transmit source or destination addresses. Instead, the mobile devices 301 to 305 compute pair or group hashes using a hash function based on the user ids of all users in the user pair or user group as well as on a pre-shared secret.

Further, according to various examples, a system-wide distributed unique time reference (e.g. a system frame number that counts milliseconds since a certain UTC date) is used as a further ingredient in the hash function. In other words, timestamping is used for the address generation. That way, hashes (which can be seen as hash addresses) change from frame to frame while all users are able to compute the current hash based on their knowledge of the underlying user identity and the current frame number.

A pair hash or group hash can be identified by all pair or group members as belonging to that pair or group with very high probability. They thus serve as source and destination addresses that cannot be decoded by any user not part of the pair or group (thus enabling privacy) while only occupying few space in a header (e.g. 32 bit) independent of the size of the addressed group.

The timestamping scheme has the effect that a hash collision, which can occur in any system due to the finite length of the hashes (birthday paradox) and which may still occur in spite of the timestamping, will not repeat itself in the same form with very high probability. Furthermore, an attacker who is unaware of the underlying user ID is not able to predict future hashes even if past hashes have been observed. Replay attacks are also avoided by choosing the timestamp such that it does not repeat.

In the following, an example for the generation and usage of user pair and group hashes for dedicated discovery and user privacy is described.

A Pair ID # AB for a pair between user A and B is for example calculated as

$$\# AB = \# BA = h(uniqueCloudID\_A, uniqueCloudID\_B, presharedKey\_AB)$$

where the unique cloud IDs of users A and B are concatenated, e.g., according to their lexicographical order so that the pair ID # AB= # BA is well-defined. h(.) is a hash function such as a SHA-2 hash function. The pre-shared key is a secret only known to both users and is exchanged in advance (e.g. via a cloud service or via some near-field communication technique). The unique cloud IDs could be the actual user IDs that are employed by the communication system 300. If such level of granularity is not provided to the mobile terminal's transceiver 306 to 310 from an application (i.e. the respective mobile terminal's application processor), the application layer (i.e. an application running on the respective mobile terminal) can also provide hashes of the original user IDs that are obtained with a much longer hash function (e.g. 256 instead of 32 bits) so that the IDs are effectively unique but still do not reveal the actual user ids. For each user, the addition of a pair hash ID for each of the user's friends (i.e. befriended other users) effectively doubles the amount of hashes. The addition of each group hash further increments the number of hashes that need to be monitored by one.

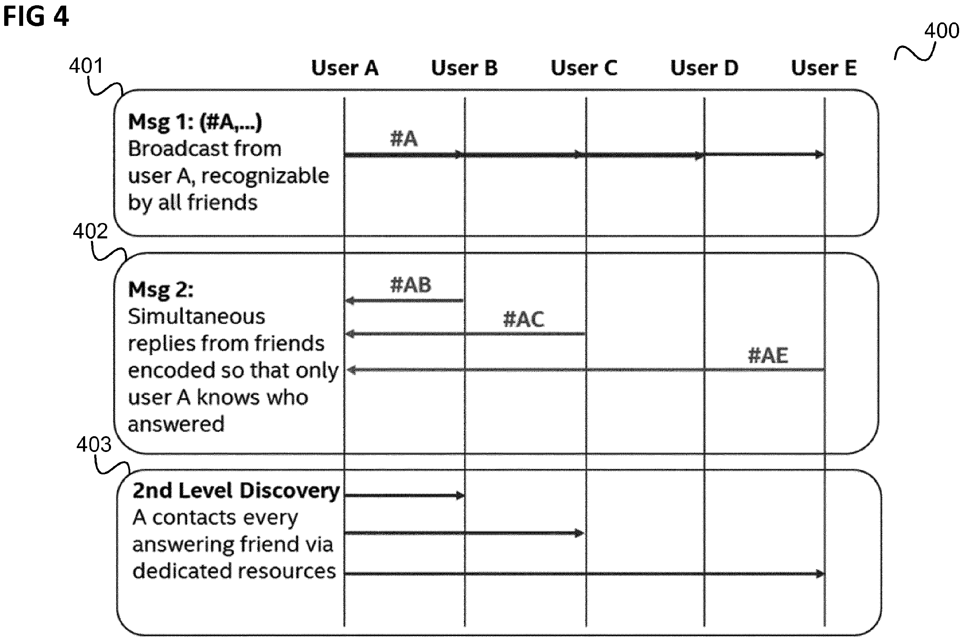

Figure 4 shows a message flow diagram 400 for hash ID exchange for presence discovery.

The message flow takes place between users A, B, C, D, E corresponding to the users and mobile devices of figure 3.

For presence inquiry, in 401, user A sends its user-specific hash ID # A that is recognized by all friends of user A.

In 402, all friends (e.g., B, C, E) answer by sending their respective joint pair hash IDs with A, i.e., # AB, # AC, # AE.

Thus, only A's friends know that A was searching for friends and only A can identify who replied to him.

In 403, user A may contact users B, C, E via dedicated communication resources.

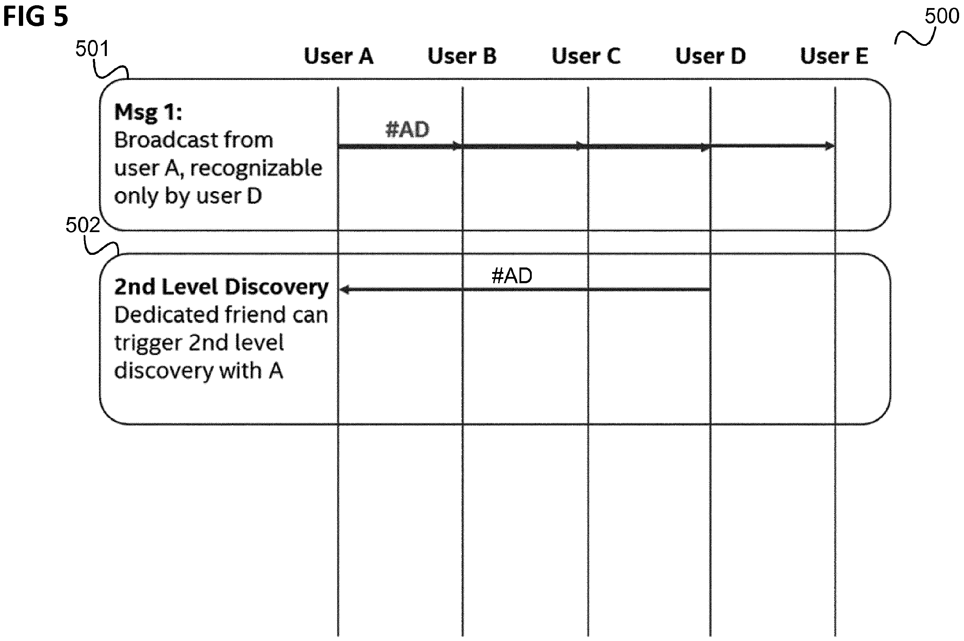

Figure 5 shows a message flow diagram 500 for hash ID exchange for dedicated discovery.

The message flow takes place between users A, B, C, D, E corresponding to the users and mobile devices of figure 3.

In 501, for dedicated inquiry of user D, for example, user A sends its pair-specific hash ID #AD that only recognized by user D.

In 502, upon reception, user D can directly trigger 2nd level discovery with user A.

Thus, no friend of A can identify who A is looking for and no friend of D knows that D is being contacted by A.

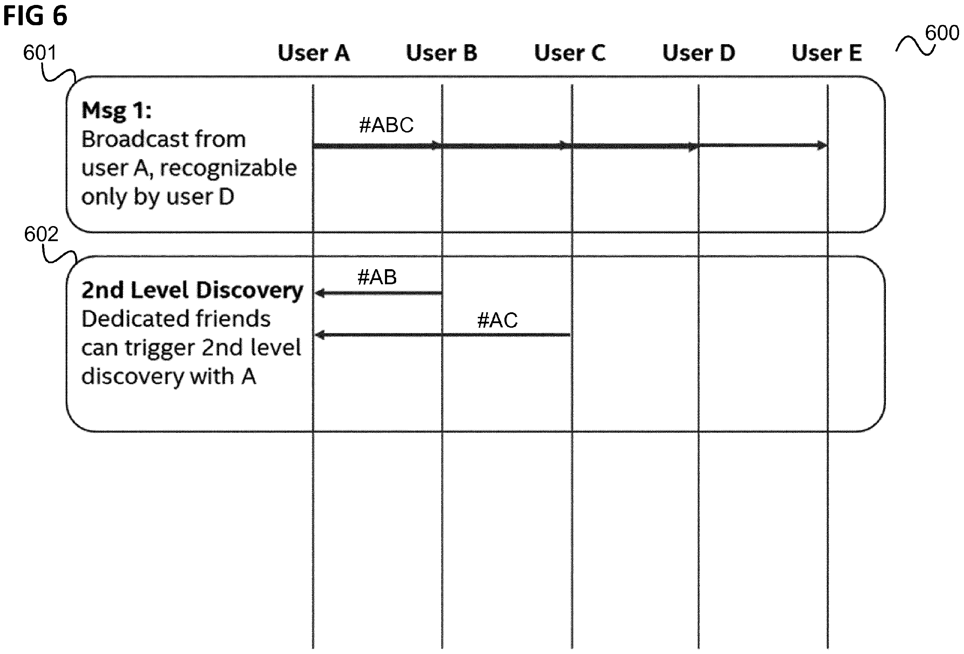

Figure 6 shows a message flow diagram 600 for hash ID exchange for group discovery.

The message flow takes place between users A, B, C, D, E corresponding to the users and mobile devices of figure 3.

In 601, for dedicated inquiry of the users in a group with group ID # ABC, user A sends the group-specific ID # ABC that is only recognized by members of the group.

In 602, upon reception, users B and Ccan directly trigger 2nd level discovery.

It should be noted that user B and user C would also have to establish which group member triggered the query. Nobody else is able to identify who queried or answered.

As mentioned above, according to various examples, hash address generation may also be based on a time stamp. For example, system time-based hash IDs are used for avoiding trackability and resolving hash collisions.

This may be for example done by composing a hash of a user id and a timestamp according to

$$\# A = h(uniqueID\_A, SystemTime\_t1)$$

Or to generate a hash for a pair of users according to

$$\# AB = \# BA = h(uniqueCloudID\_A, uniqueCloudID\_B, presharedKey\_AB, systemTimeStamp).$$

Similarly, a hash for a group of users may be generated which depends on system time.

Since all mobile devices 301 to 305 in the communication system 300 agree on the current system time, the hash of a pair or group of users is well-defined.

Furthermore, for a non-friend user, future hash IDs won't be predictable, hence no tracking of non-friends is possible.

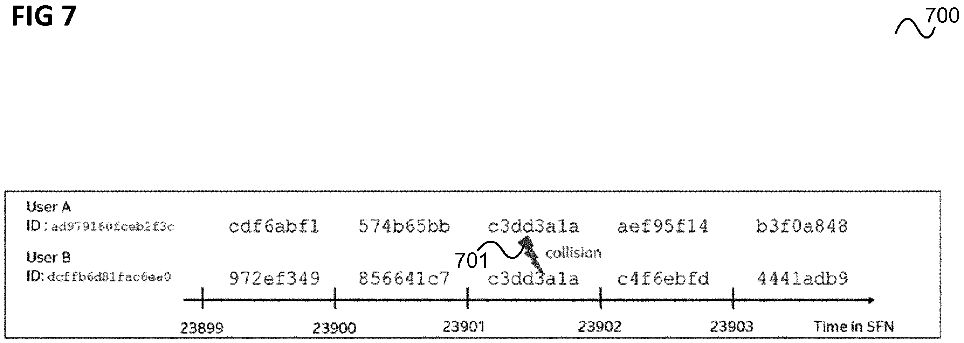

Figure 7 shows a diagram 700 illustrating the avoidance of hash collisions between two users (user A and user B).

Time flows from left to right and is given in system frame numbers (SFNs).

Having each hash depend on a temporary id helps to avoid permanent hash collisions but will increase the likelihood that a collision occurs at some point in time because each new timestamp generates a "new round" of hashes that have equal collision likelihoods. But instead of having to bother about the birthday paradox collision probability that in a group of N users there are any two colliding hashes, only the rate with which the collision of one of our hashes (single user, pairs, groups) and all the hashes in the system occurs needs to be considered. This turns a permanent error situation into a temporary one that only adds incremental traffic (e.g. for erroneous discovery responses) at a very low rate.

As it is illustrated in figure 7, when at a certain point in time (i.e. a certain SFN), a hash collision 701 occurs, the hash collision is resolved in the following SFN because the hashes depend on system time and thus do not stay the same.

As a basis for the timestamp, a globally available standard time like the GPS (Global Positioning system) time (GPST) or the International Atomic Time (TAI) or UTC (Coordinated Universal Time) may be used. Such a time basis may be received by a mobile terminal (handset) via GPS / GNSS (global navigation satellite system) or by means of terrestrial services which send the GPS time.

When a system frame number (SFN) is used care may be taken to avoid that an overflow (like in case of LTE, e.g. the SFN has values from 0 to 1023) leads to repeating hash values.

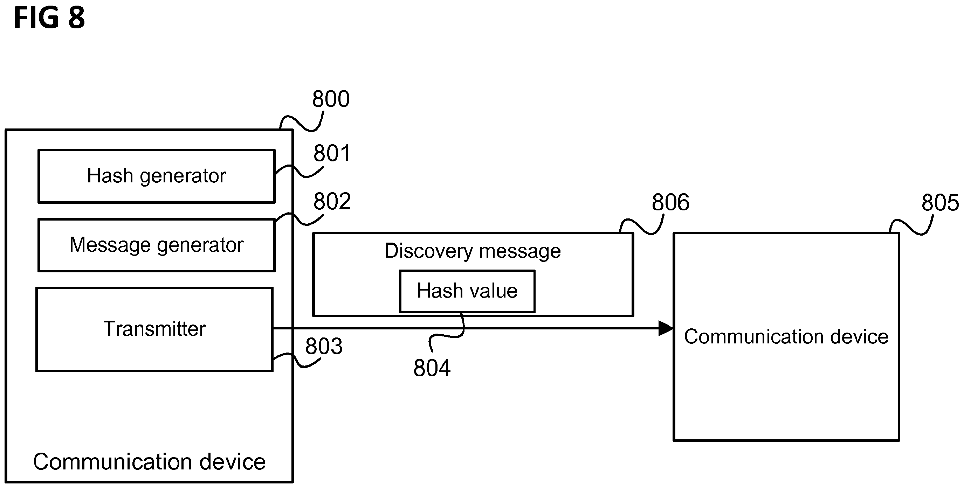

In summary, according to various examples, a communication device is provided as illustrated in figure 8.

Figure 8 shows a communication device 800.

The communication device 800 includes a processor or a hash generator 801 configured to determine or generate a hash value 804 based on at least one of an identification of at least the communication device and a secret information shared between the communication device 800 and another communication device 805.

The communication device 800 further includes a message generator 802 configured to generate a discovery message 806 including the hash value 804.

Further, the communication device 800 includes a transmitter 803 configured to transmit the discovery message 806 to the another communication device 805.

According to various examples, in other words, a communication device (e.g. a mobile terminal) generates and transmits a message to another communication device (directed to the other communication device or via broadcast) which includes a hash value which depends on an identification of the communication device (and possible identifications of the other communication device and possibly additional communication devices, e.g. in the case of group discovery) and/or a secret information (e.g. a cryptographic key) shared between the communication device and the other communication device.

For example, the communication device, e.g. of a user A, uses a pair hash or group hash which allows a dedicated discovery where the user A searches explicitly for one or multiple specific other users without the need for increasing the address fields in the headers. The approach of figure 8 also allows protecting such a discovery or communication between a source and (multiple) destinations from sniffing, e.g., by common friends who would otherwise be able to identify source and/or destination IDs. Furthermore, it allows preventing replay attacks, the tracking of an otherwise unknown user by its temporary ID by some malicious sniffer.

Additionally, the hash value may depend on a periodically changing information, e.g. a timestamp, which allows automatically resolving hash collisions that are inherent to any hash-based addressing system. Hash collisions can occur but can be avoided to occur in the same form again with high probability. With sufficiently long hashes, the rate of erroneously triggered reactions to a temporary collision can be arbitrarily small. The timestamp may for example be based on a standard time basis which is available to both communication devices 800, 803. The time basis may be generated by one of the communication devices 800, 803 or an additional communication device (e.g. a further mobile terminal, a satellite or a base station).

The communication device (e.g. the transmitter) may for example be implemented by one or more processors. A "processor" may be understood as any kind of a logic implementing entity, which may be special purpose circuitry or a processor executing software stored in a memory, firmware, or any combination thereof. Thus a "processor" may be a hardwired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The transmitter may be part of a transceiver which may for example be at least partially implemented by a modem (e.g. an LTE modem), a baseband processor or other transceiver components or also by an application processor. The communication device may for example be a communication terminal such as a portable phone and may include typical communication terminal devices such as a transceiver (including e.g. a baseband processor, one or more filters, transmit chains, receive chains, amplifiers etc.), an antenna, a subscriber identity module, an application processor, a memory, a display, a battery, a speaker, a microphone etc. The process may generate the hash value of the discovery message. Alternatively, the communication device may further include a hash generator configured to generate the hash value of the discovery message.

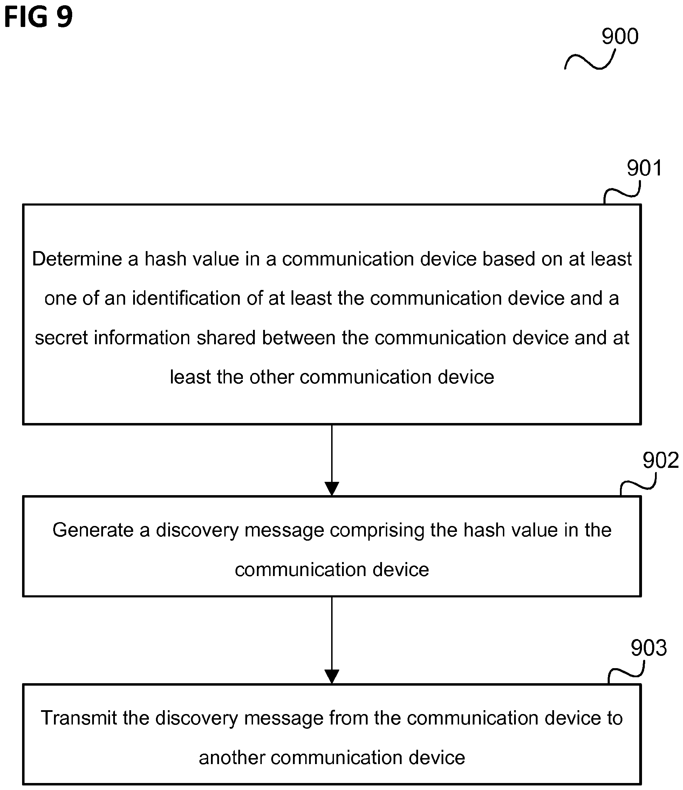

Figure 9 shows a flow diagram 900 illustrating a method for device discovery, for example carried out by a communication device.

In 901, the communication device includes a processor or hash generator that determines a hash value in a communication device based on at least one of an identification of at least the communication device and a secret information shared between the communication device and at least the other communication device.

In 902, the communication device includes a processor or hash generator that generates a discovery message including the hash value in the communication device.

In 903, the communication device includes a transmitter that transmits the discovery message from the communication device to another communication device

The following examples pertain to further exemplary implementations.

Example 1 is a communication device as illustrated in figure 8.

In Example 2, the subject-matter of Example 1 may optionally include the hash value depending on a periodically changing information element.

In Example 3, the subject-matter of Example 2 may optionally include the periodically changing information element being a timestamp or a frame number.

In Example 4, the subject-matter of any one of Examples 1-3 may optionally include the discovery message being a message according to a Device-to-Device communication protocol.

In Example 5, the subject-matter of any one of Examples 1-4 may optionally include the communication device discovery message being a message for setting up Device-to-Device communication between the communication device and the other communication device.

In Example 6, the subject-matter of any one of Examples 1-5 may optionally include the hash value depending on an identification of the communication device and the identification of the other communication device.

In Example 7, the subject-matter of any one of Examples 1-6 may optionally include the hash value depending on the identifications of one or more additional communication devices.

In Example 8, the subject-matter of any one of Examples 1-7 may optionally include the discovery message being a broadcast message.

In Example 9, the subject-matter of any one of Examples 1-8 may optionally include the discovery message being a response message to a broadcast discovery message.

In Example 10, the subject-matter of any one of Examples 1-9 may optionally include the secret information being a cryptographic key previously shared between the communication device and the other communication device.

Example 11 is a method for device discovery as illustrated in figure 9.

In Example 12, the subject-matter of Example 11 may optionally include the hash value depending on a periodically changing information element.

In Example 13, the subject-matter of Example 12 may optionally include the periodically changing information element being a timestamp or a frame number.

In Example 14, the subject-matter of any one of Examples 11-13 may optionally include the discovery message being a message according to a Device-to-Device communication protocol.

In Example 15, the subject-matter of any one of Examples 11-14 may optionally include the communication device discovery message being a message for setting up Device-to-Device communication between the communication device and the other communication device.

In Example 16, the subject-matter of any one of Examples 11-15 may optionally include the hash value depending on an identification of the communication device and the identification of the other communication device.

In Example 17, the subject-matter of any one of Examples 11-16 may optionally include the hash value depending on the identifications of one or more additional communication devices.

In Example 18, the subject-matter of any one of Examples 11-17 may optionally include the discovery message being a broadcast message.

In Example 19, the subject-matter of any one of Examples 11-18 may optionally include the discovery message being a response message to a broadcast discovery message.

In Example 20, the subject-matter of any one of Examples 11-19 may optionally include the secret information being a cryptographic key previously shared between the communication device and the other communication device.

According to a further example, a method for initiating communication is provided including receiving, in a communication device, a discovery message from another communication device, wherein the discovery message includes a hash value based on at least one of an identification of at least the another communication device and a secret information shared between the communication device and the another communication device and initiating communication with the another communication device in response to receiving the discovery message.

According to a further example, a communication device is provided including a hash generator configured to generate a hash value based on an identification of the communication device or a secret information shared between the communication device and another communication device or both and including a transceiver configured to generate a discovery message including the hash value and to send the discovery message.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1.  A communication device comprising
    a processor or a hash generator configured to determine or generate a hash value based on at least one of

    an identification of at least the communication device and
    a secret information shared between the communication device and another communication device;

    a message generator configured to generate a discovery message comprising the hash value; and
    a transmitter configured to transmit the discovery message to the another communication device.

2.  The communication device of claim 1, wherein the hash value is based on a periodically changing information element.

3.  The communication device of claim 2, wherein the periodically changing information element is a timestamp or a frame number.

4.  The communication device of claim 1, wherein the discovery message is a message according to a Device-to-Device communication protocol.

5.  The communication device of claim 1, wherein the communication device discovery message is a message for setting up Device-to-Device communication between the communication device and the another communication device.

6.  The communication device of claim 1, wherein the hash value is based on an identification of the communication device and the identification of the another communication device.

7.  The communication device of claim 1, wherein the hash value is based on the identification of one or more additional communication devices.

8.  The communication device of claim 1, wherein the discovery message is a broadcast message.

9.  The communication device of claim 1, wherein the discovery message is a response message to a broadcast discovery message.

10. The communication device of claim 1, wherein the secret information is a cryptographic key previously shared between the communication device and the another communication device.

11. A method for device discovery comprising:

    determining a hash value in a communication device based on at least one of

    an identification of at least the communication device and
    a secret information shared between the communication device and at least another communication device;

generating a discovery message comprising the hash value in the communication device; and
transmitting the discovery message from the communication device to the another communication device.

12. The method of claim 11, wherein the hash value is based on a periodically changing information element.

13. The method of claim 12, wherein the periodically changing information element is a timestamp or a frame number.

14. The method of claim 11, wherein the discovery message is a message according to a Device-to-Device communication protocol.

15. A method for initiating communication comprising:

receiving, in a communication device, a discovery message from another communication device, wherein the discovery message comprises a hash value based on at least one of

an identification of at least the another communication device and
a secret information shared between the communication device and the another communication device and

initiating communication with the another communication device in response to
receiving the discovery message.

**FIG 1**

100

102

109    110

MME    S-GW

108

108

108    108

103

((•))

S1    S1

104    S1    107    S1    103

X2    eNB    eNB    E-UTRAN

106    107    X2    ((•))    X2    107    104

112    eNB

111    104    103

105

# FIG 2

EP 3 541 008 A1

**FIG 3**

300

302
307
TX
B

303
308
TX
C

301
306
TX
A

305
310
TX
E

304
309
TX
D

EP 3 541 008 A1

# FIG 4

**400**

**401**

| | User A | User B | User C | User D | User E |
|---|---|---|---|---|---|
| **Msg 1: (#A,...)** Broadcast from user A, recognizable by all friends | #A → | → | → | → | → |

**402**

| | User A | User B | User C | User D | User E |
|---|---|---|---|---|---|
| **Msg 2:** Simultaneous replies from friends encoded so that only user A knows who answered | | #AB ← | #AC ← | | #AE ← |

**403**

| | User A | User B | User C | User D | User E |
|---|---|---|---|---|---|
| **2nd Level Discovery** A contacts every answering friend via dedicated resources | → | → | → | → | → |

EP 3 541 008 A1

**FIG 5**

500

501

502

| | User A | User B | User C | User D | User E |

**Msg 1:**
Broadcast from user A, recognizable only by user D

#AD

**2nd Level Discovery**
Dedicated friend can trigger 2nd level discovery with A

#AD

**FIG 6**

600

User A   User B   User C   User D   User E

#ABC

#AB

#AC

601

**Msg 1:**
Broadcast from user A, recognizable only by user D

602

**2nd Level Discovery**
Dedicated friends can trigger 2nd level discovery with A

# FIG 7

~700

| | | | | | |
|---|---|---|---|---|---|
| **User A**<br>ID : ad979160fceb2f3c | cdf6abf1 | 574b65bb | c3dd3a1a | aef95f14 | b3f0a848 |
| | | | | collision | |
| **User B**<br>ID : dcffb6d81fac6ea0 | 972ef349 | 856641c7 | c3dd3a1a | c4f6ebfd | 4441adb9 |
| | 23899 | 23900 | 23901 | 23902 | 23903    Time in SFN |

701

# FIG 8

# FIG 9

900

901

Determine a hash value in a communication device based on at least one of an identification of at least the communication device and a secret information shared between the communication device and at least the other communication device

902

Generate a discovery message comprising the hash value in the communication device

903

Transmit the discovery message from the communication device to another communication device

Europäisches
Patentamt

European
Patent Office

Office européen
des brevets

**EUROPEAN SEARCH REPORT**

Application Number

EP 18 16 1669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/065362 A1 (CHOYI VINOD K [US] ET AL) 3 March 2016 (2016-03-03) * paragraph [0074] - paragraph [0089]; figures 11A,11B * | 1-15 | INV. H04L9/32 H04W76/14 H04W48/16 |
| X | US 2018/041946 A1 (PARK HYUNHEE [KR] ET AL) 8 February 2018 (2018-02-08) * paragraph [0138] - paragraph [0173] * | 1-15 | |
| A | "3rd Generation Partnership Project; Technical Specification Group Services and System Aspects; Study on security issues to support Proximity Services (ProSe) (Release 13)", 3GPP STANDARD ; TECHNICAL REPORT ; 3GPP TR 33.833, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V13.0.0, 10 January 2017 (2017-01-10), pages 1-227, XP051295575, [retrieved on 2017-01-10] * page 153 * | 1-15 | TECHNICAL FIELDS SEARCHED (IPC) H04L H04W |

The present search report has been drawn up for all claims

| Place of search | Date of completion of the search | Examiner |
|---|---|---|
| Munich | 22 May 2018 | Allot, Corentin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 541 008 A1

## ANNEX TO THE EUROPEAN SEARCH REPORT
## ON EUROPEAN PATENT APPLICATION NO.

EP 18 16 1669

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2018

| Patent document cited in search report | Publication date | Patent family member(s) | Publication date |
|---|---|---|---|
| US 2016065362 A1 | 03-03-2016 | CN 105103578 A | 25-11-2015 |
| | | EP 2982148 A1 | 10-02-2016 |
| | | JP 2016518075 A | 20-06-2016 |
| | | KR 20150139602 A | 11-12-2015 |
| | | TW 201511513 A | 16-03-2015 |
| | | US 2016065362 A1 | 03-03-2016 |
| | | WO 2014165747 A1 | 09-10-2014 |
| US 2018041946 A1 | 08-02-2018 | US 2018041946 A1 | 08-02-2018 |
| | | WO 2016137224 A1 | 01-09-2016 |

EPO FORM P0459

For more details about this annex : see Official Journal of the European Patent Office, No. 12/82